(19)

Europäisches
Patentamt

European
Patent Office

Office européen
des brevets

(11) **EP 3 696 930 A1**

(12) **EUROPÄISCHE PATENTANMELDUNG**

(43) Veröffentlichungstag:
**19.08.2020  Patentblatt 2020/34**

(21) Anmeldenummer: **19157506.7**

(22) Anmeldetag: **15.02.2019**

(51) Int Cl.:
*H02J 1/06* (2006.01)     *H02J 1/10* (2006.01)
*H02J 1/14* (2006.01)     *H02J 3/36* (2006.01)

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**
Benannte Erstreckungsstaaten:
**BA ME**
Benannte Validierungsstaaten:
**KH MA MD TN**

(71) Anmelder: **Siemens Aktiengesellschaft**
**80333 München (DE)**

(72) Erfinder: **GAUDENZ, Markus Matthias**
**91056 Erlangen (DE)**

(54) **GLEICHSPANNUNGSNETZ MIT VARIABLER SPANNUNG**

(57)  Die Erfindung betrifft ein Gleichspannungsnetz (1), wobei das Gleichspannungsnetz (1) mit einer Gleichspannung ($U_1$) betreibbar ist. Zur Verbesserung des Gleichspannungsnetzes (1) wird vorgeschlagen, dass das Gleichspannungsnetz (1) einen Steller (2) aufweist, mit dem die Gleichspannung ($U_1$) des Gleichspannungsnetzes (1) variierbar ist, wobei der Betrag der Gleichspannung ($U_1$) vom Zustand der Energiequellen (3) und/oder der Energiespeicher (4) und/oder der elektrischen Verbraucher (5) abhängt. Ferner betrifft die Erfindung ein Verfahren zum Betreiben eines derartigen Gleichspannungsnetzes (1), wobei die Gleichspannung ($U_1$) des Gleichspannungsnetzes (1) in Abhängigkeit vom Zustand der Energiequellen (3) und/oder der Energiespeicher (4) und/oder der elektrischen Verbraucher (5) gesteuert oder geregelt wird.

FIG 1

EP 3 696 930 A1

**Beschreibung**

Die Erfindung betrifft ein Gleichspannungsnetz, wobei das Gleichspannungsnetz mit einer Gleichspannung betreibbar ist. Ferner betrifft die Erfindung ein Verfahren zum Betreiben eines derartigen Gleichspannungsnetzes.

Bei einem Energieversorgungsnetz wird elektrischen Verbrauchern elektrische Energie bereitgestellt. Dabei liegt an den Versorgungsleitungen des Energieversorgungsnetzes eine Spannung an. Bei Anschluss eines Verbrauchers kann dieser den Versorgungsleitungen einen Strom entnehmen. Dabei wird elektrische Energie aus dem Energieversorgungsnetz entnommen. Bei der Spannung kann es sich um eine Wechselspannung eines Wechselspannungsnetzes oder um die Gleichspannung eines Gleichstromnetzes handeln.

Heutzutage sind Energieverteilungsnetze als Wechselspannungsnetze ausgebildet. Diese bieten die Möglichkeit, auf einfache Weise mittels Transformatoren unterschiedliche Spannungsebenen zu generieren. Bei einem DC Netz wird der Einfachheit halber die Gleichspannung auf einen konstanten Wert gehalten und den Verbrauchern zur Verfügung gestellt. Dafür wird meistens der maximal zulässige Nominalwert zugrunde gelegt. Damit können die elektrischen Verbraucher bei konstanter Leistung mit einem geringen Strom versorgt werden. Elektrische Verluste sind dabei aufgrund des geringen Stroms gering.

Der Erfindung liegt die Aufgabe zugrunde, ein Gleichspannungsnetz zu verbessern.

Diese Aufgabe wird durch ein Gleichspannungsnetz gelöst, wobei das Gleichspannungsnetz mit einer Gleichspannung betreibbar ist, wobei das Gleichspannungsnetz einen Steller aufweist, mit dem die Gleichspannung des Gleichspannungsnetzes variierbar ist, wobei der Betrag der Gleichspannung vom Zustand der Energiequellen und/oder der Energiespeicher und/oder der elektrischen Verbraucher abhängt. Ferner wird diese Aufgabe durch ein Verfahren zum Betreiben eines derartigen Gleichspannungsnetzes gelöst, wobei die Gleichspannung des Gleichspannungsnetzes in Abhängigkeit vom Zustand der Energiequellen und/oder der Energiespeicher und/oder der elektrischen Verbraucher gesteuert oder geregelt wird.

Weitere vorteilhafte Ausgestaltungen der Erfindung sind in den abhängigen Ansprüchen angegeben.

Der Erfindung liegt die Erkenntnis zugrunde, dass sich das Gleichspannungsnetz dadurch verbessern lässt, dass die Spannung des Gleichspannungsnetzes variabel ist und den Zustand des Gleichspannungsnetzes wiedergibt. Die Erfindung betrifft die Ausgestaltung der Spannungsregelung in dem Gleichspannungsnetz. Es geht darum, den Zustand des Energieversorgungsnetzes anhand der Gleichspannung des Netzes zu beschreiben. Somit ist dann jedem Verbraucher, jeder Quelle und jedem Speicher der Zustand des Energieversorgungsnetzes unmittelbar bekannt und kann darauf angemessen und stabilisierend reagieren.

Durch den Betrag der Gleichspannung lässt sich auf einfache Weise der Zustand eines Energieverteilungsnetzes beschreiben. Liegt ein Überangebot an erzeugter Energie vor oder weisen die Energiespeicher, die mit dem Gleichspannungsnetz verbunden sind, einen hohen Füllstand (SoC State of Charge) auf so, steigt die Netzspannung. Damit wird der Zustand ausgedrückt, dass das Netz eine gute Abgabefähigkeit von Energie und Leistung aufweist. Andererseits soll durch eine niedrige Gleichspannung ausgedrückt werden, dass die Abgabefähigkeit von elektrischer Energie beschränkt ist. Die elektrischen Verbraucher können auf diese Zustände durch ein angepasstes Betriebsverhalten angemessen darauf reagieren.

Eine hohe Gleichspannung zeigt den Energiequellen, dass sie ihre erzeugte Leistung reduzieren können oder den Energiespeichern, dass sie Energie aus dem Netz aufnehmen sollen. Alternativ oder ergänzend kann ein hoher Füllgrad der Energiespeicher auch durch eine hohe Spannung im Energieversorgungsnetz ausgedrückt werden. Dies zeigt den Quellen an, ihre erzeugte Leistung zu reduzieren, um das Netz vor Ausfall durch ein Überangebot von elektrischer Energie zu schützen.

Denkbar sind auch ein erster oberer Schwellwert, bei dem die Energiespeicher Energie aufnehmen sollen und ein darüber liegender zweiter oberer Schwellwert, bei dem die Energieerzeuger ihre erzeugte Leistung (evtl. zu Lasten des Wirkungsgrades) reduzieren. Das gleiche gilt für ein zu geringes Angebot an elektrischer Energie. Ab einem ersten unteren Schwellwert werden die Energieerzeuger dazu aufgefordert, ihre erzeugte Leistung zu erhöhen und ab einem unteren zweiten Schwellwert speisen die Energiespeicher elektrische Energie in das Energieverteilungsnetz ein. Dabei kann der erste untere Schwellwert kleiner oder größer sein als der zweite untere Schwellwert. Darüber hinaus kann auch ein weiterer unterer Schwellwert eingeführt werden, bei dem die elektrischen Verbraucher ihre aufgenommene Leistung reduzieren.

Auf eine übergeordnete Steuerung/Regelung kann verzichtet werden, die dafür sorgt, dass den Verbrauchern hinreichend elektrische Energie zur Verfügung steht und das Energieversorgungsnetz vor Überlastung schützt. Jede Komponente im Energieversorgungsnetz, sei es Verbraucher, Erzeuger oder Speicher ist durch die Höhe der Netzspannung über den Zustand des DC Netzes informiert und kann so gezielt zur Stabilität des DC Netzes beitragen.

Bei einer vorteilhaften Ausgestaltung der Erfindung wird die Gleichspannung mit steigendem Füllgrad der Energiespeicher angehoben. Der Füllgrad eines Energiespeichers wird oftmals als SoC (State of Charge) angegeben. Es kann über den Füllgrad aller im Gleichspannungsnetz befindlicher Energiespeicher ein mittlerer Füllgrad ermittelt werden. Dieser Mittelwert kann dabei noch mit der durch den entsprechenden Energiespeicher speicherbaren Energiemenge gewichtet werden. Je höher dieser Wert ist desto höher wird die Gleichspannung im Netz gesteuert oder geregelt. Den elektrischen Verbrauchern wird mit der hohen Gleichspannung die hohe Leistungsfähigkeit des Gleichspannungsnetzes gezeigt.

Bei einer weiteren vorteilhaften Ausgestaltung der Erfindung wird wobei die Gleichspannung mit sinkender Auslastung der Energiequellen angehoben. Je geringer die Auslastung der Energiequellen ist, desto größer ist die Fähigkeit, Leistung in das Gleichspannungsnetz zu liefern. Unter Auslastung der Energiequelle ist das Verhältnis von eingespeister Leistung zu maximal einspeisbarer Leistung der entsprechenden Energiequelle gemeint. Somit wird bei einer niedrigen Auslastung der Energiequellen der Betrag der Spannung heraufgesetzt.

Bei einer weiteren vorteilhaften Ausgestaltung der Erfindung wird bei Überschreiten eines ersten Grenzwertes ein Teil der Energiequellen des Gleichspannungsnetzes abgeschaltet. Hierbei handelt es sich um eine Maßnahme, wie die Information über den Zustand des Gleichspannungsnetz vorteilhaft für den Betrieb des Gleichspannungsnetzes genutzt werden kann. Wenn die Lieferfähigkeit von elektrischer Leistung derart groß ist, dass diese einen ersten Grenzwert überschreitet, können einzelne Energiequellen abgeschaltet werden. Dies ist unter anderem auch dann möglich, wenn die Energiespeicher einen hohen Füllgrad, beispielsweise oberhalb von 80%, aufweisen. Durch das Abschalten von Energiequellen wird das Gleichspannungsnetz wirtschaftlich betrieben, da mit höherer Auslastung der Energiequellen auch oftmals ein höherer Wirkungsgrad verbunden ist.

Bei einer weiteren vorteilhaften Ausgestaltung der Erfindung wird bei Unterschreiten eines zweiten Grenzwertes zumindest ein Teil der Energiespeicher entladen. Wenn die Gleichspannung niedrig ist und unter einen zweiten Grenzwert abfällt, lässt das darauf schließen, dass das Angebot an Leistung von den Energiequellen nicht ausreicht, um den Bedarf der elektrischen Verbraucher zu decken. In diesem Fall ist es vorteilhaft, die Energiespeicher zu entladen und damit den elektrischen Verbrauchern zusätzlich Energie im Gleichspannungsnetz bereitzustellen. Dies wirkt sich stabilisierend auf das Zusammenspiel von Energiequellen und elektrischen Verbrauchern aus.

Bei einer weiteren vorteilhaften Ausgestaltung der Erfindung wird bei Unterschreiten eines dritten Grenzwertes ein Teil der elektrischen Verbraucher mit reduzierter Leistung betrieben oder abgeschaltet. Wenn die gelieferte Leistung hinter dem Bedarf der Verbraucher zurückbleibt und auch schon die Energiequellen mit einer hohen Auslastung von beispielsweise mehr als 90% oder sogar 100% betrieben werden, dann ist es vorteilhaft, wenn die elektrischen Verbraucher diesen Zustand anhand des Betrages der Gleichspannung erkennen und ihre Leistung reduzieren. Sollte das nicht ausreichen, können diese, beispielsweise bei Unterschreiten eines weiteren Grenzwertes, auch abgeschaltet werden.

Im Folgenden wird die Erfindung anhand der in den Figuren dargestellten Ausführungsbeispiele näher beschrieben und erläutert. Es zeigen:

FIG 1    ein Gleichspannungsnetz,
FIG 2    den Zusammenhang zwischen Füllgrad des Energiespeichers und erstem Spannungsanpassungsfaktor und
FIG 3    den Zusammenhang zwischen Auslastung der Energiequellen und zweitem Spannungsanpassungsfaktor.

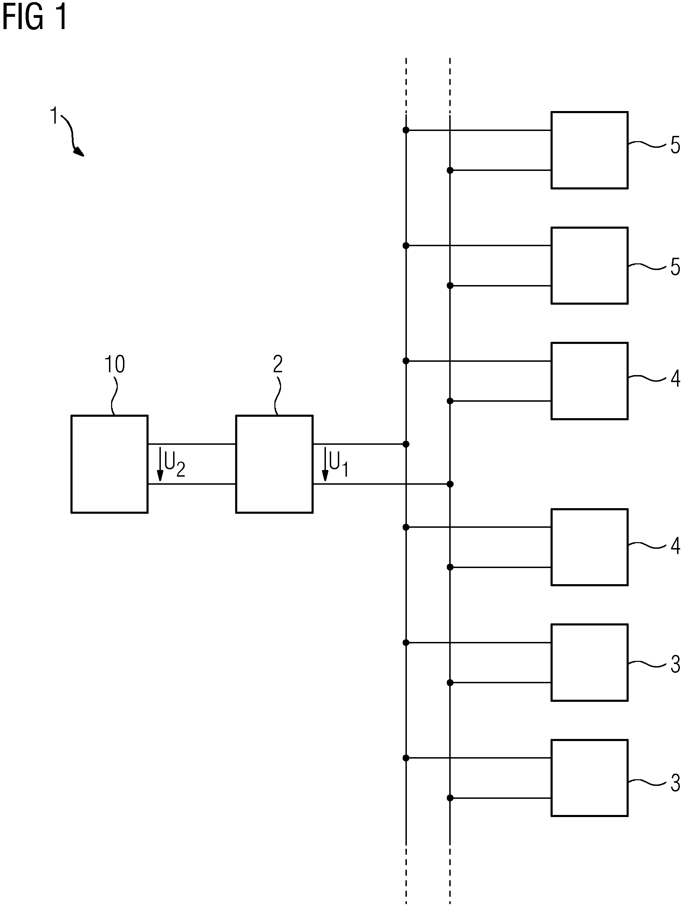

Die FIG 1 zeigt ein Ausführungsbeispiel für ein Gleichspannungsnetz 1. Dieses weist eine oder mehrere Energiequellen 3 elektrischen Verbrauchern 5 auf. Zusätzlich kann das Gleichspannungsnetz 1 auch Energiespeicher 4 aufweisen. Die Gleichspannung $U_1$ des Gleichspannungsnetzes 1 ist variabel. Diese kann durch den Steller 2 angepasst werden, um den Zustand des Gleichspannungsnetzes zu beschreiben. Gespeist wird der Steller 2 aus einer Spannungsquelle 10 mit einer Spannung $U_2$. Bei der Spannungsquelle handelt es sich um eine Energiequelle, die über den Steller 2 die Gleichspannung $U_1$ im Gleichspannungsnetz 1 vorgibt.

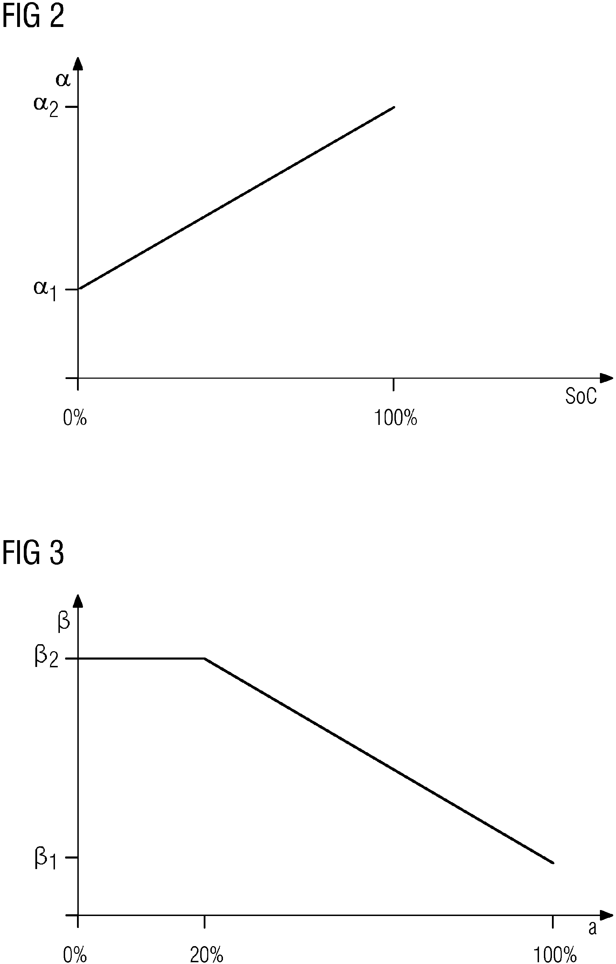

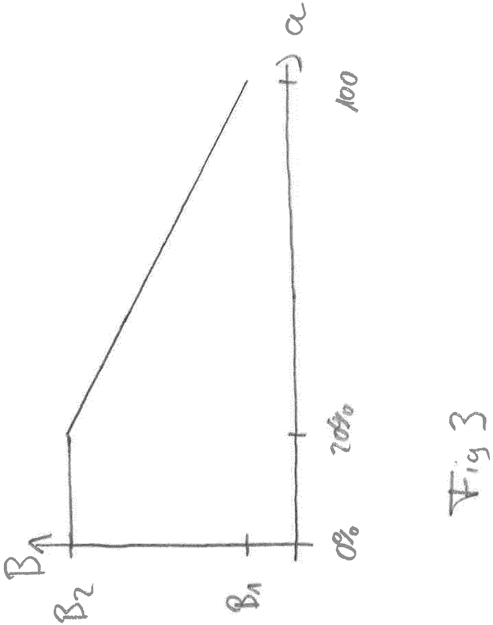

Die FIG 2 zeigt ein Diagramm für die Anpassung der Gleichspannung $U_1$ in Abhängigkeit vom Füllgrad SoC des Energiespeichers 4. Je voller der Energiespeicher 4, desto höher der erste Spannungsanhebungsfaktor $\alpha$. Die Gleichspannung $U_1$ ergibt aus der Spannung $U_2$ der Spannungsquelle 10 durch Multiplikation mit dem ersten Spannungsanpassungsfaktor $\alpha$ zu

$$U_1 = U_2 \cdot \alpha \,.$$

Dabei kann der Zusammenhang zwischen Füllgrad SoC und erstem Spannungsanpassungsfaktor $\alpha$ linear sein, kann aber auch durch jede andere monotone Funktion gebildet werden.

Die FIG 3 zeigt ein Diagramm für die Anpassung der Gleichspannung $U_1$ in Abhängigkeit von der Auslastung a der Energiequellen 3. Je geringer die Auslastung der Energiequellen, desto höher der zweite Spannungsanhebungsfaktor $\beta$. Die Gleichspannung $U_1$ ergibt aus der Spannung $U_2$ der Spannungsquelle 10 durch Multiplikation mit dem zweiten Spannungsanpassungsfaktor $\beta$ zu

$$U_1 = U_2 \cdot \beta \,.$$

Dabei kann der Zusammenhang zwischen Auslastung a und zweitem Spannungsanpassungsfaktor $\beta$ linear sein, kann aber auch durch jede andere monotone Funktion gebildet werden. Dabei kann es vorteilhaft sein, wenn über einen bestimmten Bereich der Auslastung a der zweite Spannungsanpassungsfaktor β konstant ist.

Wird sowohl ein erster als auch ein zweiter Spannungsanpassungsfaktor durch Einbeziehung des Füllgrades SoC und der Auslastung a verwendet, so ergibt sich die Gleichspannung $U_1$ aus der Spannung $U_2$ der Spannungsquelle 10 durch Multiplikation mit dem ersten Spannungsanpassungsfaktor α und dem zweiten Spannungsanpassungsfaktor β zu

$$U_1 = U_2 \cdot \alpha \cdot \beta\,.$$

Die einzelnen Werte $\alpha_1$, $\alpha_2$, $\beta_1$, $\beta_2$ des ersten und zweiten Spannungsanpassungsfaktors ergeben sich durch die Auslegung des Gleichspannungsnetzes 1. Dabei ist zu berücksichtigen, dass durch die Werte $\alpha_1$, $\alpha_2$, $\beta_1$, $\beta_2$ das Gleichspannungsnetz 1 weder spannungsmäßig noch strommäßig überlastet wird.

Zusammenfassend betrifft die Erfindung ein Gleichspannungsnetz, wobei das Gleichspannungsnetz mit einer Gleichspannung betreibbar ist. Zur Verbesserung des Gleichspannungsnetzes wird vorgeschlagen, dass das Gleichspannungsnetz einen Steller aufweist, mit dem die Gleichspannung des Gleichspannungsnetzes variierbar ist, wobei der Betrag der Gleichspannung vom Zustand der Energiequellen und/oder der Energiespeicher und/oder der elektrischen Verbraucher abhängt. Ferner betrifft die Erfindung ein Verfahren zum Betreiben eines derartigen Gleichspannungsnetzes, wobei die Gleichspannung des Gleichspannungsnetzes in Abhängigkeit vom Zustand der Energiequellen und/oder der Energiespeicher und/oder der elektrischen Verbraucher gesteuert oder geregelt wird.

**Patentansprüche**

1. Gleichspannungsnetz (1), wobei das Gleichspannungsnetz (1) mit einer Gleichspannung ($U_1$) betreibbar ist, wobei das Gleichspannungsnetz (1) einen Steller (2) aufweist, mit dem die Gleichspannung ($U_1$) des Gleichspannungsnetzes (1) variierbar ist, wobei der Betrag der Gleichspannung ($U_1$) vom Zustand der Energiequellen (3) und/oder der Energiespeicher (4) und/oder der elektrischen Verbraucher (5) abhängt.

2. Verfahren zum Betreiben eines Gleichspannungsnetzes (1) nach Anspruch 1, wobei die Gleichspannung ($U_1$) des Gleichspannungsnetzes (1) in Abhängigkeit vom Zustand der Energiequellen (3) und/oder der Energiespeicher (4) und/oder der elektrischen Verbraucher (5) gesteuert oder geregelt wird.

3. Verfahren nach Anspruch 2, wobei die Gleichspannung ($U_1$) mit steigendem Füllgrad (SoC) der Energiespeicher (4) angehoben wird.

4. Verfahren nach einem der Ansprüche 2 oder 3, wobei die Gleichspannung ($U_1$) mit sinkender Auslastung der Energiequellen (3) angehoben wird.

5. Verfahren nach einem der Ansprüche 2 bis 4, wobei bei Überschreiten eines ersten Grenzwertes ein Teil der Energiequellen (3) des Gleichspannungsnetzes (1) abgeschaltet wird.

6. Verfahren nach einem der Ansprüche 2 bis 5, wobei bei Unterschreiten eines zweiten Grenzwertes zumindest ein Teil der Energiespeicher (4) entladen wird.

7. Verfahren nach einem der Ansprüche 2 bis 6, wobei bei Unterschreiten eines dritten Grenzwertes ein Teil der elektrischen Verbraucher (5) mit reduzierter Leistung betrieben oder abgeschaltet wird.

# FIG 1

FIG 2

FIG 3

Fig 3

EP 3 696 930 A1

**Europäisches Patentamt**
**European Patent Office**
**Office européen des brevets**

# EUROPÄISCHER RECHERCHENBERICHT

**Nummer der Anmeldung**

EP 19 15 7506

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X | US 2016/336746 A1 (CHENG LEONG CHING [GB]) 17. November 2016 (2016-11-17) * Absatz [0003] * * Absatz [0021] - Absatz [0022]; Abbildungen 1,2 * * Absatz [0023]; Abbildung 3 * ----- | 1-7 | INV. H02J1/06 H02J1/10 H02J1/14 H02J3/36 |
| A | US 2016/018837 A1 (KAUFMAN JOSHUA DANIEL [US] ET AL) 21. Januar 2016 (2016-01-21) * Absatz [0005] * ----- | 1-7 | |

**RECHERCHIERTE SACHGEBIETE (IPC)**

H02J

Der vorliegende Recherchenbericht wurde für alle Patentansprüche erstellt

| Recherchenort | Abschlußdatum der Recherche | Prüfer |
|---|---|---|
| München | 31. Juli 2019 | Lindquist, Jim |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument

.................................................................................
& : Mitglied der gleichen Patentfamilie, übereinstimmendes Dokument

EPO FORM 1503 03.82 (P04C03)

**ANHANG ZUM EUROPÄISCHEN RECHERCHENBERICHT
ÜBER DIE EUROPÄISCHE PATENTANMELDUNG NR.**

EP 19 15 7506

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

31-07-2019

| Im Recherchenbericht angeführtes Patentdokument | Datum der Veröffentlichung | Mitglied(er) der Patentfamilie | Datum der Veröffentlichung |
|---|---|---|---|
| US 2016336746 A1 | 17-11-2016 | CN 106104952 A<br>EP 2897245 A1<br>US 2016336746 A1<br>WO 2015107167 A1 | 09-11-2016<br>22-07-2015<br>17-11-2016<br>23-07-2015 |
| US 2016018837 A1 | 21-01-2016 | US 2012299386 A1<br>US 2016018837 A1<br>US 2018253117 A1 | 29-11-2012<br>21-01-2016<br>06-09-2018 |

Für nähere Einzelheiten zu diesem Anhang : siehe Amtsblatt des Europäischen Patentamts, Nr.12/82

EPO FORM P0461